(19) Europäisches Patentamt
European Patent Office
Office européen des brevets

(11) EP 1 577 913 A1

(12) EUROPEAN PATENT APPLICATION
published in accordance with Art. 158(3) EPC

(43) Date of publication:
21.09.2005 Bulletin 2005/38

(21) Application number: 03768173.1

(22) Date of filing: 24.12.2003

(51) Int Cl.7: H01G 9/038

(86) International application number:
PCT/JP2003/016585

(87) International publication number:
WO 2004/059671 (15.07.2004 Gazette 2004/29)

(84) Designated Contracting States:
AT BE BG CH CY CZ DE DK EE ES FI FR GB GR HU IE IT LI LU MC NL PT RO SE SI SK TR
Designated Extension States:
AL LT LV MK

(30) Priority: 26.12.2002 JP 2002377128

(71) Applicant: Bridgestone Corporation
Tokyo 104-8340 (JP)

(72) Inventors:
- OTSUKI, Masashi,
Bridgestone Co. Technical Center
Kodaira-shi, Tokyo 187-8531 (JP)
- HORIKAWA, Yasuro,
Bridgestone Co. Technical Center
Kodaira-shi, Tokyo 187-8531 (JP)

(74) Representative: Whalley, Kevin
Marks & Clerk
90 Long Acre
London WC2E 9RA (GB)

# (54) ADDITIVE FOR NONAQUEOUS ELECTROLYTIC SOLUTION OF ELECTRIC DOUBLE LAYER CAPACITOR AND NONAQUEOUS ELECTROLYTE ELECTRIC DOUBLE LAYER CAPACITOR

(57) The invention is concerned with an additive for a non-aqueous electrolyte of an electric double layer capacitor having a high dissolving power of a support salt and a low viscosity and comprising a phosphazene derivative represented by the following formula (I):

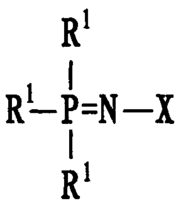

··· (I)

(wherein $R^1$ is independently a halogen element or a monovalent substituent; and X is an organic group containing at least one element selected from the group consisting of:carbon, silicon, nitrogen, phosphorus, oxygen and sulfur) as well as a non-aqueous electrolyte electric double layer capacitor comprising an electrolyte containing this additive and having excellent high-rate characteristics.

EP 1 577 913 A1

## Description

### TECHNICAL FIELD

This invention relates to an additive for a non-aqueous electrolyte of an electric double layer capacitor and a non-aqueous electrolyte electric double layer capacitor obtained by adding the additive to a non-aqueous electrolyte, and more particularly to an additive for a non-aqueous electrolyte of an electric double layer capacitor having a high dissolving power of a support salt and a low viscosity and a non-aqueous electrolyte electric double layer capacitor having excellent high-rate characteristics (quick discharge-charge characteristics).

### BACKGROUND ART

The non-aqueous electrolyte electric double layer capacitor is a condenser utilizing an electric double layer formed between a polarizable electrode and an electrolyte, which is a product developed and practiced in the 1970s, rendered into an infant stage in 1980s and come into a growth developing stage in 1990s. In such a non-aqueous electrolyte electric double layer capacitor, a cycle of electrically adsorbing an ion on a surface of an electrode from an electrolyte is charge-discharge cycle, which is different from a battery in which a cycle of oxidation-reduction reaction accompanied with a mass transfer is charge-discharge cycle. Therefore, the non-aqueous electric double layer capacitor is excellent in the instant charge-discharge characteristics as compared with the battery, and also the instant charge-discharge characteristics are not substantially deteriorated even in the repetition of the charge-discharge. Also, a simple and cheap electric circuit is sufficient in the non-aqueous electrolyte electric double layer capacitor because there is no overvoltage in the charge-discharge. Further, it has many merits that the residual capacity is easily understandable, and there is the temperature durable characteristic over a wide temperature range of -30 to 90°C, and there is no pollution and the like as compared with the battery, so that it recently comes under the spotlight as an earth-conscious and new energy-storing product.

The electric double layer capacitor is an energy-storing device comprising positive and negative polarizable electrodes and an electrolyte, in which positive and negative charges are oppositely arranged in a contact interface between the polarizable electrode and the electrolyte at a very short separating distance to form an electric double layer. The electrolyte plays a role as an ion source for the formation of the electric double layer, so that it is an important substance dominating basic characteristics of the energy-storing device likewise the polarizable electrode. As the electrolyte have hitherto been known aqueous electrolyte, non-aqueous electrolyte, solid electrolyte and the like. From a point of improving the energy density of the electric double layer capacitor, non-aqueous electrolytes capable of setting a high operating voltage particularly come under the spotlight and are putting into practical use. As such a non-aqueous electrolyte is now practiced a non-aqueous electrolyte obtained by dissolving a solute (support salt) such as $(C_2H_5)_4P\cdot BF4$, $(C_2H_5)_4N\cdot BF4$ or the like in an organic solvent having a high dielectric constant such as a carbonate (ethylene carbonate, propylene carbonate), γ-butyrolactone or the like.

However, since the flash point of the solvent is low in these non-aqueous electrolytes, there is a problem that the risk is high because if the non-aqueous electrolyte electric double layer capacitor is fired by heat generation or the like, the electrolyte is ignited and the flame is burnt out over the surface of the electrolyte. Also, there is a problem that the non-aqueous electrolyte based on the organic solvent is vaporized and decomposed accompanied with the heat generation of the non-aqueous electrolyte electric double layer capacitor to generate a gas, and the non-aqueous electrolyte electric double layer capacitor is broken or fired by the generated gas to ignite the non-aqueous electrolyte to burn out over the surface of the electrolyte.

On the contrary, there are known non-aqueous electrolyte electric double layer capacitors in which the risk of firing and igniting the electrolyte is largely reduced by adding a particular phosphazene derivative to the electrolyte (see JP-A-2001-217152 and JP-A-2001-217154). In this electric double layer capacitor, the self-extinguishing property or flame retardance is given to the non-aqueous electrolyte by a nitrogen gas or a halogen gas derived from the phosphazene derivative, whereby the risk of the fire and ignition is reduced. Also, phosphorus constituting the phosphazene derivative has an action of suppressing the chain decomposition of a high molecular weight material constituting the electric double layer capacitor, so that the risk of the fire and ignition is effectively reduced.

However, cyclic phosphazene derivatives disclosed in JP-A-2001-217152 and JP-A-2001-217154 are very poor in the dissolving power of a support salt, so that when a greater amount of the cyclic phosphazene derivative is added to the non-aqueous electrolyte, an ionic conductivity of the electrolyte is lowered to lower the electric conductivity and hence the quick discharge characteristic and quick charge characteristic of the electric double layer capacitor are poor. Recently, a quick start (quick discharge) characteristic or an energy recovery (quick charge) characteristic in the braking is demanded in the electric double layer capacitor as an auxiliary power source for actively examined electric cars, so that the electric double layer capacitor obtained by adding a great amount of the cyclic phosphazene derivative to the electrolyte is effective in the application of the flame retardance but has a problem in the further stability of the

quick charge-discharge as an electric double layer capacitor for the auxiliary power source of the electric car. Also, such a tendency becomes remarkable at a temperature lower than room temperature, so that there is particularly a problem in the quick charge characteristic and quick discharge characteristic under a low temperature environment.

On the other hand, chain phosphazene derivatives disclosed in JP-A-2001-217152 and JP-A-2001-217154 are sufficient in the dissolving power of the support salt, but are somewhat higher in the viscosity as compared with the cyclic phosphazene derivative, so that when such a chain phosphazene derivative is added to the electrolyte, there is a tendency of lowering the electric conductivity of the electric double layer capacitor. The lowering of the electric conductivity results in the lowering of the above quick discharge and quick charge characteristics, so that the electric double layer capacitor having the chain phosphazene derivative added to the electrolyte has a problem in the quick discharge and quick charge characteristics.

DISCLOSURE OF THE INVENTION

It is, therefore, an object of the invention to solve the problems of the conventional techniques and to provide an additive for a non-aqueous electrolyte of an electric double layer capacitor having a high dissolving power of a support salt and a low viscosity and a non-aqueous electrolyte electric double layer capacitor containing this additive in a non-aqueous electrolyte and having excellent high-rate characteristics (quick discharge-charge characteristics).

The inventors have made various studies in order to achieve the above object, and found that a specified chain phosphazene derivatives has a low viscosity and a high dissolving power of a support salt and that when such a phosphazene derivative is added to an electrolyte of a non-aqueous electrolyte electric double layer capacitor, the quick discharge characteristic and quick charge characteristic of this electric double layer capacitor are improved, and as a result, the invention has been accomplished.

That is, the additive for a non-aqueous electrolyte of an electric double layer capacitor according to the invention is characterized by comprising a phosphazene derivative represented by the following formula (I):

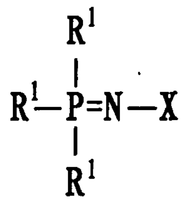

··· (I)

(wherein $R^1$ is independently a halogen element or a monovalent substituent; and X is an organic group containing at least one element selected from the group consisting of carbon, silicon, nitrogen, phosphorus, oxygen and sulfur).

In a preferable embodiment of the additive for the non-aqueous electrolyte of the electric double layer capacitor according to the invention, at least one of $R^1$s in the formula (I) is a halogen.
As the halogen, fluorine is particularly preferable.

In another preferable embodiment of the additive for the non-aqueous electrolyte of the electric double layer capacitor according to the invention, $R^1$ in the formula (I) is any one of an alkoxy group, a phenoxy group, an alkyl group, an aryl group, an acyl group, an amino group, an alkylthio group and an arylthio group.

In the other preferable embodiment of the additive for the non-aqueous electrolyte of the electric double layer capacitor according to the invention, X in the formula (I) is represented by any one of the following formulae (IA), (IB), (IC), (ID) and (IE):

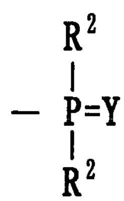

··· (IA)

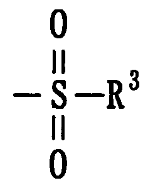 ··· (IB)

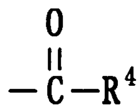 ··· (IC)

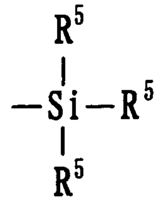 ··· (ID)

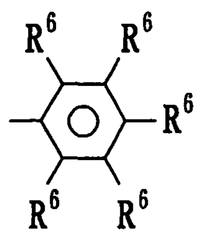 ··· (IE)

(in the formulae (IA), (IB), (IC), (ID) and (IE), $R^2$, $R^3$, $R^4$, $R^5$ and $R^6$ are independently a halogen element or a monovalent substituent; and Y is an organic group containing at least one element selected from the group consisting of oxygen, sulfur, carbon, silicon, nitrogen and phosphorus).

Also, the non-aqueous electrolyte electric double layer capacitor according to the invention is characterized by comprising a non-aqueous electrolyte containing the above additive for the non-aqueous electrolyte of the electric double layer capacitor and a support salt, a positive electrode, and a negative electrode.

In a preferable embodiment of the non-aqueous electrolyte electric double layer capacitor according to the invention, a content of the phosphazene derivative in the non-aqueous electrolyte is not less than 1 volume%. At the moment, the content of the phosphazene derivative in the non-aqueous electrolyte is preferably not less than 2 volume% from a viewpoint of the prevention of deterioration of support salt, further preferably not less than 5 volume% from a viewpoint of the application of flame retardance to the electrolyte, particularly preferably not less than 10 volume% from a viewpoint of the application of incombustibility to the electrolyte.

## BEST MODE FOR CARRYING OUT THE INVENTION

The invention will be described in detail below.

<Additive for non-aqueous electrolyte of electric double layer capacitor>

The additive for the non-aqueous electrolyte of the electric double layer capacitor according to the invention comprises a phosphazene derivative represented by the formula (I). This phosphazene derivative is high in the dielectric constant and high in the dissolving power of the support salt because it is a chain structure. Also, a compound in which a halogen having a high electronegativity is directly bonded to phosphorus or sulfur is very low in the viscosity. For this end, the non-aqueous electrolyte containing such a phosphazene derivative is high in the ionic conductivity, and also the non-aqueous electrolyte electric double layer capacitor using such a non-aqueous electrolyte is excellent in the quick charge characteristic and quick discharge characteristic.

Further, when the above phosphazene derivative is included into the conventional non-aqueous electrolyte, it is possible to give an excellent safety to the non-aqueous electrolyte electric double layer capacitor in the thermal runaway and reduce the risk of ignition or the like under an action of nitrogen gas and phosphoric acid ester derived from the phosphazene derivative. Also, since phosphorus has an action of suppressing the chain decomposition of the high molecular weight material constituting the electric double layer capacitor, the safety of the electric double layer capacitor can be improved effectively.

Moreover, it is considered in the non-aqueous electrolyte electric double layer capacitor that a compound produced by decomposition or reaction of the electrolyte component or the support salt in the non-aqueous electrolyte corrodes the electrode and the surrounding members or the amount of the support salt itself is decreased by such a decomposition or reaction to thereby bring about the troubles in the electric characteristics and deteriorate the performances of the capacitor. On the contrary, the phosphazene derivative suppresses the decomposition or reaction of the electrolyte or support salt (particularly effectively acts to $PF_6$ salt) and contributes to the stabilization thereof. Therefore, it is possible to suppress the deterioration while maintaining the electric characteristics by adding the phosphazene derivative to the conventional non-aqueous electrolyte.

The viscosity at 25°C of the phosphazene derivative represented by the formula (I) is not particularly limited as long as it is not more than 4.5 mPa · s (cP), but it is preferably not more than 3.8 mPa · s (cP), more preferably not more than 2.9 mPa · s (cP) from a viewpoint of the improvement of the electric conduction and the improvement of low temperature characteristics. In the invention, the viscosity is determined by using a viscosity measuring device (R-type viscometer Model RE500-SL, made by Toki Sangyo Co., Ltd.) and conducting the measurement at each revolution rate of 1 rpm, 2 rpm, 3 rpm, 5 rpm, 7 rpm, 10 rpm, 20 rpm and 50 rpm for 120 seconds to measure a viscosity under the revolution rate when an indication value is 50-60% as an analytical condition.

The saturated dissolving amount of the support salt in the phosphazene derivative of the formula (I) is 1.5-3.0 mol per 1000 mL of the phosphazene derivative, for example, when the support salt is $(C_2H_5)_4N \cdot BF_4$, and is preferable to be not less than 2.0 mol from a viewpoint of more preferably improving the electric conduction and low temperature characteristics.

In the formula (I), $R^1$ is independently a halogen element or a monovalent substituent. As the halogen element, fluorine, chlorine, bromine and the like are preferable, and among them, fluorine is particularly preferable in a point that the viscosity is low. As the monovalent substituent are mentioned an alkoxy group, a phenoxy group, an alkyl group, an aryl group, an acyl group, an amino group, an alkylthio group, an arylthio group and the like. Among them, the alkoxy group, phenoxy group and amino group are preferable in a point that the preparation is easy.

As the alkoxy group are mentioned methoxy group, ethoxy group, propoxy group, butoxy group, an allyloxy group having a double bond, and an alkoxy-substituted alkoxy group such as methoxyethoxy group, methoxyethoxyethoxy group or the like. As the phenoxy group are mentioned phenoxy group, methylphenoxy group, methoxyphenoxy group and the like. As the alkyl group are mentioned methyl group, ethyl group, propyl group, butyl group, pentyl group and the like. As the acyl group are mentioned formyl group, acetyl group, propionyl group, butyryl group, isobutyryl group, valelyl group and the like. As the aryl group are mentioned phenyl group, tolyl group, naphthyl group and the like. As the amino group are mentioned amino group, methylamino group, dimethylamino group, ethylamino group, diethylamino group, aziridyl group, pyrrolidyl group and the like. As the alkylthio group are mentioned methylthio group, ethylthio group, phenylthio group and the like. As the arylthio group are mentioned phenylthio group, tolylthio group, naphthylthio group and the like.

A hydrogen element in the monovalent substituent may be substituted with a halogen element. In the formula (I), all of $R^1$s may be the same kind of the substituent, or some of them may be different substituents. Particularly, a case that at least one of $R^1$s is a halogen is preferable in a point that the flame retardance is improved, and further a case that the halogen is fluorine is particularly preferable in a point that the viscosity is low.

In the formula (I), X is preferable to be an organic group having a structure represented by any one of the formulae (IA)-(IE). In the formulae (IA)-(IE), $R^2$-$R^6$ are independently a halogen element or a monovalent substituent. As $R^2$-$R^6$ are preferably mentioned the same halogen elements and monovalent substituents as described in $R^1$ of the formula (I). $R^2$, $R^5$ and $R^6$ may be the same or different in the same organic group, or may be bonded to each other to form a ring. As Y are mentioned, for example, NR group (R is an alkyl group, an alkoxyl group, a phenyl group or the like, which is so forth on), and a group containing an element such as oxygen, sulfur, carbon, phosphorus, silicon or the like, and among them, NR group, oxygen and sulfur are preferable.

<Non-aqueous electrolyte electric double layer capacitor>

The non-aqueous electrolyte electric double layer capacitor according to the invention comprises a non-aqueous electrolyte containing the aforementioned additive for the non-aqueous electrolyte of the electric double layer capacitor and a support salt, a positive electrode and a negative electrode. The support salt contained in the non-aqueous electrolyte can be selected from the conventionally known ones, but a quaternary ammonium salt is preferable

in a point that the electric conduction or the like in the electrolyte is good.
The quaternary ammonium salt is a solute of the electrolyte playing a role as an ion source for the formation of the electric double layer. The quaternary ammonium salt capable of forming a polyvalent ion is preferable in a point that it is possible to effectively improve the electric characteristics of the electrolyte such as electric conduction and the like.

As the quaternary ammonium salt are preferably mentioned $(CH_3)_4N{\cdot}BF_4$, $(CH_3)_3C_2H_5N{\cdot}BF_4$, $(CH_3)_2(C_2H_5)_2N{\cdot}BF_4$, $CH_3(C_2H_5)_3N{\cdot}BF_4$, $(C_2H_5)_4N{\cdot}BF_4$, $(C_3H_7)_4N{\cdot}BF_4$, $CH_3(C_4H_9)N{\cdot}BF_4$, $(C_4H_9)_4N{\cdot}BF_4$, $(C_6H_{13})_4N{\cdot}BF_4$, $(C_2H_5)_4N{\cdot}ClO_4$, $(C_2H_5)_4N{\cdot}AsF_6$, $(C_2H_5)_4N{\cdot}SbF_6$, $(C_2H_5)_4N{\cdot}CF_3SO_3$, $(C_2H_5)_4N{\cdot}C_4F_9SO_3$, $(C_2H_5)_4N{\cdot}(CF_3SO_2)_2N$, $(C_2H_5)_4N{\cdot}BCH_3(C_2H_5)_3$, $(C_2H_5)_4N{\cdot}B(C_2H_5)_4$, $(C_2H_5)_4N{\cdot}B(C_4H_9)_4$, $(C_2H_5)_4N{\cdot}B(C_6H_5)_4$ and the like. Also, a hexafluorophosphate in which an anion part of the quaternary ammonium salt (e.g. $\cdot BF_4$, $\cdot ClO_2$, $\cdot AsF_6$ or the like) is replaced with ·PF6 is preferable. Among them, a quaternary ammonium salt in which different alkyl groups are bonded to N atom is preferable in a point that the solubility can be improved by making a polarity large. Further, compounds represented by the following formulae (a)-(j) are preferably mentioned as the quaternary ammonium salt. In the formulae (a)-(j), Me is a methyl group and Et is ethyl group.

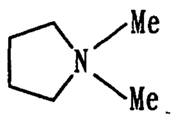 $BF_4$ · · · · · (a)

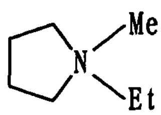 $BF_4$ · · · · · (b)

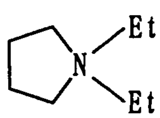 $BF_4$ · · · · · (c)

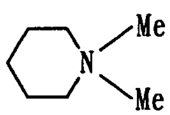 $BF_4$ · · · · · (d)

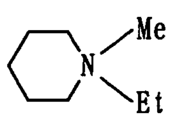 $BF_4$ · · · · · (e)

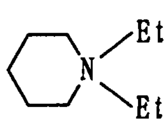 $BF_4$ · · · · · (f)

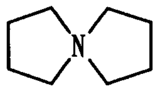 $BF_4$ · · · · · (g)

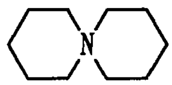 $BF_4$ · · · · · (h)

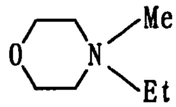 $BF_4$ · · · · · (i)

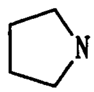 $BF_4$ · · · · · (j)

Among these quaternary ammonium salts, the salt capable of generating $(CH_3)_4N^+$, $(C_2H_5)_4N^+$ or the like as a cation is particularly preferable from a viewpoint of ensuring a high electric conduction. Also, the salt capable of producing an anion with a small formula weight is preferable. These quaternary ammonium salts may be used alone or in a combination of two or more.

The phosphazene derivative represented by the formula (I) is high in the dissolving power of the support salt and low in the viscosity as previously mentioned, so that the ionic conductivity of the electrolyte is improved. As a result, the non-aqueous electrolyte electric double layer capacitor according to the invention using this electrolyte is high in the electric conductivity, excellent in the quick discharge characteristic and quick charge characteristic and also excellent in the low temperature characteristics.

The amount of the support salt compounded to the non-aqueous electrolyte is preferably 0.5-1.5 mol, more preferably 0.5-1.0 mol per 1 L of the electrolyte (solvent component). When the amount is less than 0.5 mol, the sufficient electric characteristics of the non-aqueous electrolyte such as electric conduction and the like can not be ensured, while when it exceeds 1.5 mol, the viscosity of the non-aqueous electrolyte rises and the quick charge-discharge characteristics and the low temperature characteristics may be damaged.

The electrolyte for the non-aqueous electrolyte electric double layer capacitor according to the invention may contain an aprotic organic solvent in addition to the support salt and the phosphazene derivative of the formula (I). The aprotic organic solvent is preferable to have a low viscosity and a high electric conductivity from a viewpoint of the electric characteristics.

The aprotic organic solvent is not particularly limited, but includes ether compounds, ester compounds, nitrile compounds and the like. Concretely, there are preferably mentioned 1,2-dimethoxyethane, tetrahydrofuran, dimethyl carbonate, diethyl carbonate, ethylmethyl carbonate, ethylene carbonate, propylene carbonate, diphenyl carbonate, γ-butyrolactone, γ-valerolactone, acetonitrile and the like. Among them, cyclic ester compounds such as ethylene carbonate, propylene carbonate, γ-butyrolactone and the like; chain ester compounds such as dimethyl carbonate, diethyl carbonate, ethylmethyl carbonate and the like; and chain ether compounds such as 1,2-dimethoxyethane and the like are preferable. The cyclic ester compound is preferable in a point that the dielectric constant is high and the solubility of the support salt is excellent, and the chain ester and ether compounds are preferable in a point that the viscosity is low and the viscosity of the electrolyte is made low. They may be used alone or in a combination of two or more. The viscosity at 25°C of the aprotic organic solvent is not particularly limited, but it is preferably not more than 5 mPa · s (cP), more preferably not more than 3.0 mPa · s (cP).

The viscosity at 25°C of the electrolyte in the non-aqueous electrolyte electric double layer capacitor according to the invention is preferably 1.0-5.0 mPa · s (cP), further preferably 1.0-4.0 mPa · s (cP). Since the electrolyte contains the above phosphazene derivative, the viscosity is low, and hence the non-aqueous electrolyte electric double layer

capacitor according to the invention using such an electrolyte is high in the electric conductivity and excellent in the quick discharge characteristic and quick charge characteristic.

The content of the phosphazene derivative in the electrolyte of the non-aqueous electrolyte electric double layer capacitor according to the invention is preferable to be not less than 1.0 volume% from a viewpoint that the high-rate characteristics (quick charge-discharge characteristics) of the electric double layer capacitor are preferably improved. When the content of the phosphazene derivative is within the above numerical range, the high-rate characteristics of the electric double layer capacitor can be preferably improved. Also, the phosphazene derivative is high in the wettability to the separator or the electrode in addition to the low viscosity, which is reflected in the improvement of the cell characteristics.

The content of the phosphazene derivative in the electrolyte of the non-aqueous electrolyte electric double layer capacitor according to the invention is preferable to be not less than 2 volume% from a viewpoint that "resistance to deterioration" can be preferably given to the electrolyte. When the content of the phosphazene derivative is within the above numerical range, the deterioration can be preferably suppressed. In this case, the "deterioration" means the corrosion of the electrode and surrounding members and the decrease of the concentration of the support salt accompanied therewith due to the formation of a compound through the decomposition or reaction of the electrolyte and support salt, and the effect of preventing the deterioration is evaluated by the following method of evaluating the stability.

-Stability evaluating method-

(1) After the preparation of the non-aqueous electrolyte containing the support salt, the water content is firstly measured. Then, the concentration of hydrogen fluoride in the non-aqueous electrolyte is measured by NMR, GC-MS. Further, the color tone of the non-aqueous electrolyte is visually observed, and thereafter the electric conduction is measured.

(2) After the non-aqueous electrolyte is left to stand in a globe box for 2 months, the water content and concentration of hydrogen fluoride are again measured, and the color tone is observed, and the electric conduction is measured. The stability is evaluated by the change of these measured numerical values.

Also, the content of the phosphazene derivative in the electrolyte of the non-aqueous electrolyte electric double layer capacitor according to the invention is preferable to be not less than 5 volume% from a viewpoint that "flame retardance" is given to the electrolyte. Further, the content is preferable to be not less than 10 volume% from a viewpoint that "incombustibility" is given to the electrolyte. When the content of the phosphazene derivative is not less than 5 volume%, the electrolyte becomes flame retardant, while when it is not less than 10 volume%, the electrolyte becomes incombustible. At this moment, the flame retardance and incombustibility are defined by a method according to UL94HB method. In this case, when a test piece of 127 mm $\times$ 12.7 mm is prepared by penetrating 1.0 mL of the electrolytes into a non-combustible quartz fiber and then the test piece is ignited under an atmosphere environment, a case that the ignited flame does not arrive at a line of 25 mm of the device and the ignition is not observed in the falling object is the flame retardance, and a case that the ignition is not caused (combustion length: 0 mm) is the incombustibility. In the invention, the flame retardance and incombustibility are evaluated by measuring an oxygen index according to JIS K7201.

At this moment, the oxygen index means a value of lowest oxygen concentration represented by a volume percentage required for continuing the combustion of the material under given test conditions defined in JIS K7201. As the oxygen index becomes low, the risk of firing-ignition is high, while as the oxygen index becomes high, the risk of firing-ignition is low, which means that "the safety is high". Under the atmosphere condition, the oxygen index corresponds to 20.2 volume%, so that the electrolyte having an oxygen index of 20.2 volume% means that it burns in the atmosphere. As a result of the inventors' examination, it is confirmed that the electrolyte having an oxygen index of not less than 23 volume% has the flame retardance defined by the method according to the UL94HB method and the electrolyte having an oxygen index of not less than 25 volume% has the incombustibility defined by the method according to the UL94HB method, so that the flame retardance and incombustibility are evaluated by the measurement of the oxygen index in the invention.

The positive electrode constituting the non-aqueous electrolyte electric double layer capacitor according to the invention is not particularly limited, but is preferable to be usually a polarizable carbon-based electrode. As the polarizable electrode is preferable an electrode having such properties that the specific surface area and bulk gravity are usually large and the activity is electrochemically none and the resistance is small and the like. The polarizable electrode generally comprises an activated carbon and may contain other components such as an electric conductive agent, a binder and the like, if necessary.

The material of the activated carbon used as the positive electrode is not particularly limited, but includes

preferably phenolic resin, various heat-resistant resins, pitch and the like. As the heat-resistant resin are preferably mentioned resins such as polyimide, polyamide, polyamideimide, polyether imide, polyether sulfon, polyether ketone, bismalimide triazine, aramide, fluorine resin, polyphenylene, polyphenylene sulfide and the like. They may be used alone or in a combination of two or more. As the shape of the activated carbon, powder, fibrous cloth and the like are preferable from a point that the specific surface area is made higher to increase the charge capacity of the non-aqueous electrolyte electric double layer capacitor. Also, the activated carbon may be subjected to a treatment such as heat treatment, drawing, high-temperature treatment under vacuum, rolling or the like for the purpose of more increasing the charge capacity of the electric double layer capacitor.

The electric conductive agent used in the positive electrode is not particularly limited, but includes graphite, acetylene black and the like. The material of the binder is not particularly limited, but includes resins such as polyvinylidene fluoride (PVDF), polytetrafluoroethylene (PTFE) and the like.

As the negative electrode constituting the non-aqueous electrolyte electric double layer capacitor according to the invention are preferably mentioned the same polarizable electrodes as in the positive electrode.

The non-aqueous electrolyte electric double layer capacitor according to the invention is preferable to comprise a separator, a current collector, a container and the like in addition to the positive electrode, negative electrode and the electrolyte, and further there can be provided with various known members usually used in the electric double layer capacitor. At this moment, the separator is interposed between the positive and negative electrodes for the purpose of preventing the short-circuiting of the non-aqueous electrolyte electric double layer capacitor or the like. The separator is not particularly limited, but there are preferably used known separators usually used as a separator for the non-aqueous electrolyte electric double layer capacitor. As the material of the separator are preferably mentioned microporous films, non-woven fabrics, papers and the like. Concretely, there are preferably mentioned non-woven fabrics, thin-layer films and the like made of synthetic resin such as polytetrafluoroethylene, polypropylene, polyethylene or the like. Among them, a microporous film of polypropylene or polyethylene having a thickness of about 20-50 μm is particularly preferable.

The current collector is not particularly limited, but there are preferably used known ones usually used as a current collector for the non-aqueous electrolyte electric double layer capacitor. As the current collector, it is preferable to be excellent in the electrochemically corrosion resistance, chemically corrosion resistance, workability, and mechanical strengths and low in the cost, and a current collector layer made of aluminum, stainless steel, electrically conductive resin or the like is preferable.

The container is not particularly limited, but there are preferably mentioned known ones usually used as a container for the non-aqueous electrolyte electric double layer capacitor. As the material of the container are preferable aluminum, stainless steel, electrically conductive resins and the like.

The shape of the non-aqueous electrolyte electric double layer capacitor according to the invention is not particularly limited, but there are preferably mentioned various known shapes such as cylinder type (cylindrical shape, square shape), flat type (coin type) and the like. The non-aqueous electrolyte electric double layer capacitor is preferably used as an auxiliary power source for electric cars, as power source for memory backup of various electronics, industrial instruments and airplane instruments and the like, for electromagnetic holding of toys, cordless equipments, gas equipments, flash water heaters and the like and for watches such as wrist watch, wall clock, solar watch, AGS wrist watch and the like.

In the non-aqueous electrolyte electric double layer capacitor according to the invention, the electric conductivity (specific conductance) of the electrolyte is not less than 5.0 mS/cm, preferably not less than 10 mS/cm as an electric conductivity of a solution containing a support salt at a concentration of 1.0 mol/L. The non-aqueous electrolyte electric double layer capacitor according to the invention is excellent in the high-rate characteristics (quick charge-discharge characteristics) because the electric conductivity is higher than that of the conventional one as mentioned above. Moreover, the electric conductivity is a value obtained by measuring through an electric conductivity meter (trade name: CDM210, made by Radiometer Trading Co., Ltd.) while applying a constant current of 5 mA to the electric double layer capacitor.

The following examples are given in illustration of the invention and are not intended as limitations thereof.

<Examples>

Using phosphazene derivatives shown in Table 1, the saturated dissolving amount of tetraethyl ammonium fluoroborate [$(C_2H_5)_4N \cdot BF_4$ (quaternary ammonium salt)] and viscosity are measured at 25°C. The results are shown in Table 1. In Table 1, phosphazene A is a compound shown by the following formula (A), and phosphazene B is a compound shown by the following formula (B), and phosphazene C is a compound shown by the following formula (C), and phosphazene D is a compound shown by the following formula (D), which are synthesized by the following methods.

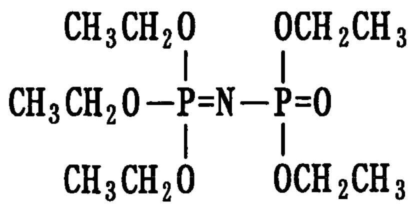

··· (A)

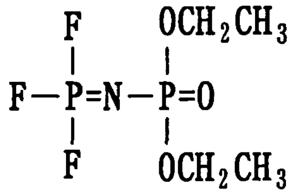

··· (B)

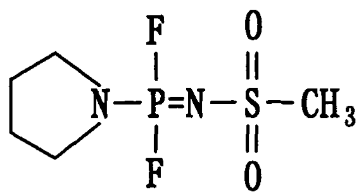

··· (C)

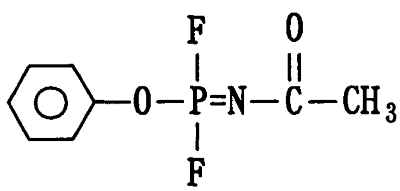

··· (D)

(Synthesis of phosphazene derivative A)

A compound of the formulas (I), in which X is represented by the formula (IA) and all of $R^1$s and $R^2$s are Cl and Y is oxygen, is reacted with sodium ethoxide in a toluene solvent at a temperature of -40°C and subjected to a molecular distillation to obtain a purified phosphazene derivative A.

(Synthesis of phosphazene derivative B)

Phosphorus trifluoride dichloride ($PCl_2F_3$) is reacted with diethyl phosphorylamide in the absence of a solvent at room temperature and subjected to a molecular distillation to obtain a purified phosphazene derivative B.

(Synthesis of phosphazene derivative C)

Phosphorus trifluoride dichloride ($PCl_2F_3$) is reacted with methane sulfonamide in the absence of a solvent at room temperature to obtain a compound of the formula (I) in which X is represented by the formula (IB) and all of $R^1$s are fluorine and $R^3$ is methyl group. Then, this compound is reacted with pyrrolidine in a toluene solvent at room temperature and subjected to a molecular distillation to obtain a purified phosphazene derivative C.

(Synthesis of phosphazene derivative D)

Phosphorus trifluoride dichloride ($PCl_2F_3$) is reacted with acetoamide in the absence of a solvent at room temperature to obtain a compound of the formula (I) in which X is represented by the formula (IC) and all of $R^1$s are fluorine and $R^4$ is methyl group. Then, this compound is added with sodium phenoxide in an acetonitrile solvent at a temperature of -40°C and subjected to a molecular distillation to obtain a purified phosphazene derivative D.

Table 1

| | Saturated dissolving amount (mol/L) | Viscosity (mPa·s) |
|---|---|---|
| Phosphazene A | 2.0 | 5.8 |
| Phosphazene B | 3.0 | 3.8 |
| Phosphazene C | 3.0 | 3.3 |
| Phosphazene D | 3.0 | 2.9 |

As seen from Table 1, the phosphazene derivatives represented by the formula (I) are excellent in the dissolving power of the support salt and low in the viscosity as compared with the conventionally used phosphazene derivative A.

Next, an electrolyte is prepared according to a compounding recipe shown in Table 2, and the viscosity of the electrolyte is measured at 25°C and the oxygen index thereof is measured by the following method.

-Method of measuring oxygen index-

The limit oxygen index is measured according to JIS K7201. A test specimen is prepared by reinforcing a $SiO_2$ sheet (quartz filter paper, incombustible) of 127 mm × 12.7 mm with a U-shaped aluminum foil so as to render into self-standing posture and impregnating 1.0 mL of the electrolyte into the $SiO_2$ sheet. This test specimen is vertically attached to a supporter for the test specimen so as to position at a distance of not less than 100 mm separated from an upper end portion of a combustion cylinder (inner diameter of 75 mm, height of 450 mm, equally filled with glass particles of 4 mm in diameter over a region ranging from the bottom to 100±5 mm, a metal net placed thereon). Then, oxygen (equal to or more than JIS K1101) and nitrogen (equal to or more than Grade 2 of JIS K1107) are flown into the combustion cylinder, while the test specimen is ignited in air (heat source is Class 1, No. 1 of JIS K2240) to examine a combustion state. Moreover, the total flowing amount in the combustion cylinder is 11.4 L/min. This test is repeated 3 times, and an average value thereof is determined.

Moreover, the oxygen index means a value of lowest oxygen concentration represented by volume percentage required for continuing the combustion of the material under given test conditions defined according to JIS K7201. In the invention, the limit oxygen index is calculated from a lowest oxygen flowing amount required for continuously burning the test specimen for not less than 3 minutes or continuing the combustion length of not less than 50 mm after the ignition and a nitrogen flowing amount at the time.

Equation: Oxygen index = (oxygen flowing amount)/([oxygen flowing amount]+[nitrogen flowing amount]) × 100 (volume%)

A non-aqueous electrolyte electric double layer capacitor is prepared by using the above electrolyte by the following method. With respect to the resulting electric double layer capacitor, the electric conduction, stability, low temperature characteristic and resistance to deterioration are measured and evaluated by the following evaluation methods. These results are shown in Tables 2 and 3.

(Preparation of electric double layer capacitor)

An activated carbon (trade name: Kuractive-1500, made by Kurare Chemical Co., Ltd.), acetylene black (electric conductive agent) and polytetrafluoroethylene (PTFE)(binder) are mixed at a mass ratio of 8/1/1/ (activated carbon/acetylene black/PTFE) to obtain a mixture. 100 g of the resulting mixture is weighed and charged into a carbon pressure vessel of 20 mmϕ and green-compacted at room temperature under a pressure of 150 kgf/cm2 to prepare positive electrode and negative electrode (polarizable electrodes). A cell is assembled by using the resulting positive and negative electrodes, analuminum metal plate (current collector)(thickness: 0.5 mm) and a polypropylene/polyethylene plate (separator)(thickness: 25 μm) and sufficiently dried through vacuum drying. This cell is impregnated with the electrolyte to prepare a non-aqueous electrolyte electric double layer capacitor.

-Measurement of electric conduction-

The electric conduction is measured by using an electric conductivity meter (trade name: CDM210, made by Radiometer Trading Co., Ltd.) while applying a constant current of 5 mA to the resulting electric double layer capacitor. The results are shown in Table 1.

-Evaluation of stability-

With respect to the resulting non-aqueous electrolyte electric double layer capacitor, internal resistance at initial stage and after charge-discharge of 1000 cycles are measured to evaluate the long-period stability. At this moment, the internal resistance (Ω) can be obtained by a well-known method of measuring the internal resistance, for example, a method in which a charge-discharge curve is determined to measure a deviation width of a potential accompanied with the stop of charge (charge rest) or the stop of discharge (discharge rest).

-Evaluation of low temperature characteristics-

The internal resistance when the electric double layer capacitor is placed at -20°C is measured by an impedance analyzer.

-Evaluation of resistance to deterioration-

With respect to the resulting non-aqueous electrolyte, the resistance to deterioration is evaluated by measuring and calculating water content (ppm), concentration of hydrogen fluoride (ppm) and electric conduction just after the preparation of the non-aqueous electrolyte and after being left to stand in a globe box for 2 months in the same manner as in the above method of evaluating the stability. Also, the change of color tone in the non-aqueous electrolyte is visually observed just after the preparation of the non-aqueous electrolyte and after being left to stand in the globe box for 2 months.

Table 2

| | Electrolyte | | | Viscosity (mPa·s) | Oxygen index (volume %) | Electric conductivity (mS/cm) | Stability of capacitor | | Low temperature characteristic |
|---|---|---|---|---|---|---|---|---|---|
| | Aprotic organic solvent (volume %) | Phosphazene (volume %) | Support salt (mol/L) | | | | Initial internal resistance (Ω) | Internal resistance after 1000 cycles (Ω) | Internal resistance at -20°C (Ω) |
| Conventional Example | GBL *1 | phosphazene A | $(C_2H_5)_4N \cdot BF_4$ | 4.5 | 22.6 | 9.5 | 0.18 | 0.19 | 0.25 |
| | 90 | 10 | 1.0 | | | | | | |
| Example 1 | GBL | phosphazene B | $(C_2H_5)_4N \cdot BF_4$ | 4.1 | 24.8 | 11.2 | 0.13 | 0.13 | 0.19 |
| | 90 | 10 | 1.0 | | | | | | |
| Example 2 | GBL | phosphazene C | $(C_2H_5)_4N \cdot BF_4$ | 4.0 | 25.2 | 11.7 | 0.12 | 0.12 | 0.18 |
| | 90 | 10 | 1.0 | | | | | | |
| Example 3 | GBL | phosphazene D | $(C_2H_5)_4N \cdot BF_4$ | 3.9 | 25.0 | 14.0 | 0.10 | 0.11 | 0.16 |
| | 90 | 10 | 1.0 | | | | | | |

*1 γ-butyrolactone

Table 3

| | Evaluation of resistance to deterioration | | | | | | | |
|---|---|---|---|---|---|---|---|---|
| | Initial | | | After being left to stand for 2 months | | | Change of color tone | Evaluation |
| | Electric conductivity (mS/cm) | HF concentration (ppm) | Water content | Electric HF conductivity (ppm) (mS/cm) | concen content tration (ppm) | Water (ppm) | | |
| Conventional Example | 0.18 | 0 | 2 | 0.18 | 0 | 2 | none | ○:good |
| Example 1 | 0.13 | 0 | 2 | 0.13 | 0 | 2 | none | ◎ :very good |
| Example 2 | 0.12 | 0 | 2 | 0.12 | 0 | 2 | none | ◎ :very good |
| Example 3 | 0.10 | 0 | 1 | 0.10 | 0 | 1 | none | ◎ :very good |

As seen from Table 2, the electrolyte in the non-aqueous electrolyte electric double layer capacitor according to the invention is low in the viscosity as compared with the conventional electrolyte, and the non-aqueous electrolyte electric double layer capacitor according to the invention using this electrolyte is high in the electric conductivity as compared with the conventional battery. As a result, the non-aqueous electrolyte electric double layer capacitor according to the invention is excellent in the quick charge characteristic and the quick discharge characteristic. Also, the characteristics as an electric double layer capacitor and the resistance to deterioration in the non-aqueous electrolyte electric double layer capacitor according to the invention are equal to or more than those of the conventional battery. Furthermore, the non-aqueous electrolyte electric double layer capacitor according to the invention is high in the oxygen index and high in the safety of the electrolyte.

INDUSTRIAL APPLICABILITY

According to the invention, there can be provided an additive for a non-aqueous electrolyte of an electric double layer capacitor having a high dissolving power of a support salt and a low viscosity. Also, the non-aqueous electrolyte electric double layer capacitor according to the invention obtained by adding this additive to the electrolyte is high in the electric conductivity and excellent in the quick discharge characteristic and the quick charge characteristic.

## Claims

1. An additive for a non-aqueous electrolyte of an electric double layer capacitor **characterized by** comprising a phosphazene derivative represented by the following formula (I):

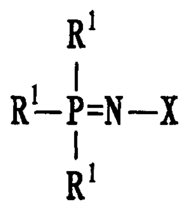 ··· (I)

(wherein $R^1$ is independently a halogen element or a monovalent substituent; and X is an organic group containing at least one element selected from the group consisting of carbon, silicon, nitrogen, phosphorus, oxygen and sulfur).

2. An additive for a non-aqueous electrolyte of an electric double layer capacitor according to claim 1, wherein at least one of $R^1{}_s$ in the formula (I) is a halogen.

3. An additive for a non-aqueous electrolyte of an electric double layer capacitor according to claim 2, wherein the halogen is fluorine.

4. An additive for a non-aqueous electrolyte of an electric double layer capacitor according to claim 1, wherein $R^1$ in the formula (I) is any one of an alkoxy group, a phenoxy group, an alkyl group, an aryl group, an acyl group, an amino group, an alkylthio group and an arylthio group.

5. An additive for a non-aqueous electrolyte of an electric double layer capacitor according to claim 1, wherein X in the formula (I) is represented by any one of the following formulae (IA), (IB), (IC), (ID) and (IE):

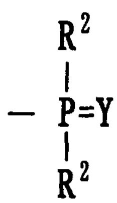 ··· (IA)

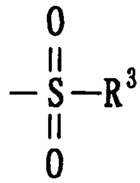 ··· (IB)

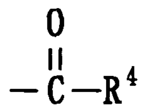 ··· (IC)

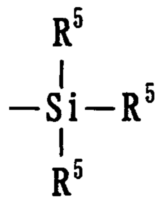 ··· (ID)

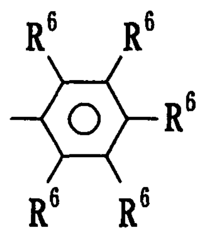 ··· (IE)

(in the formulae (IA), (IB), (IC), (ID) and (IE), $R^2$, $R^3$, $R^4$, $R^5$ and $R^6$ are independently a halogen element or a monovalent substituent; and Y is an organic group containing at least one element selected from the group consisting of oxygen, sulfur, carbon, silicon, nitrogen and phosphorus).

**6.** A non-aqueous electrolyte electric double layer capacitor comprising a non-aqueous electrolyte containing an additive for a non-aqueous electrolyte of an electric double layer capacitor as claimed in any one of claims 1 to 5 and a support salt, a positive electrode, and a negative electrode.

**7.** A non-aqueous electrolyte electric double layer capacitor according to claim 6, wherein a content of the phosphazene derivative in the non-aqueous electrolyte is not less than 1.0 volume%.

**8.** A non-aqueous electrolyte electric double layer capacitor according to claim 7, wherein the content of the phosphazene derivative in the non-aqueous electrolyte is not less than 2 volume%.

**9.** A non-aqueous electrolyte electric double layer capacitor according to claim 8, wherein the content of the phosphazene derivative in the non-aqueous electrolyte is not less than 5 volume%.

**10.** A non-aqueous electrolyte electric double layer capacitor according to claim 9, wherein the content of the phosphazene derivative in the non-aqueous electrolyte is not less than 10 volume%.

**INTERNATIONAL SEARCH REPORT**

International application No.
PCT/JP03/16585

A. CLASSIFICATION OF SUBJECT MATTER
Int.Cl[7] H01G9/038

According to International Patent Classification (IPC) or to both national classification and IPC

B. FIELDS SEARCHED

Minimum documentation searched (classification system followed by classification symbols)
Int.Cl[7] H01G9/038

Documentation searched other than minimum documentation to the extent that such documents are included in the fields searched

| | | | |
|---|---|---|---|
| Jitsuyo Shinan Koho | 1922-1996 | Toroku Jitsuyo Shinan Koho | 1994-2004 |
| Kokai Jitsuyo Shinan Koho | 1971-2004 | Jitsuyo Shinan Toroku Koho | 1996-2004 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2001-217157 A (Bridgestone Corp.), 10 August, 2001 (10.08.01), Full text; all drawings & US 6469888 B1 | 1-10 |
| X | JP 2001-217153 A (Bridgestone Corp.), 10 August, 2001 (10.08.01), Full text; all drawings & US 6452782 B1 | 1-10 |
| Y | WO 2001/39314 A1 (Bridgestone Corp.), 31 May, 2001 (31.05.01), Full text; all drawings & EP 1253662 A1 | 1-10 |

☒ Further documents are listed in the continuation of Box C. ☐ See patent family annex.

* Special categories of cited documents:
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>02 April, 2004 (02.04.04) | Date of mailing of the international search report<br>20 April, 2004 (20.04.04) |
| Name and mailing address of the ISA/<br>Japanese Patent Office<br><br>Facsimile No. | Authorized officer<br><br>Telephone No. |

Form PCT/ISA/210 (second sheet) (July 1998)

**INTERNATIONAL SEARCH REPORT**

International application No.
PCT/JP03/16585

C (Continuation). DOCUMENTS CONSIDERED TO BE RELEVANT

| Category* | Citation of document, with indication, where appropriate, of the relevant passages | Relevant to claim No. |
|---|---|---|
| E,Y | JP 2004-055208 A (Japan Storage Battery Co., Ltd.), 19 February, 2004 (19.02.04), Claims; Par. Nos. [0039] to [0043] (Family: none) | 1-10 |
| A | WO 2000/33410 A (Sony Corp.), 08 June, 2000 (08.06.00), Full text; all drawings & US 6475679 B1 & EP 1052720 A1 | 1-10 |
| A | JP 2000-030740 A (Toyota Central Research And Development Laboratories, Inc.), 28 January, 2000 (28.01.00), Full text; all drawings (Family: none) | 1-10 |

Form PCT/ISA/210 (continuation of second sheet) (July 1998)